# EUROPEAN PATENT SPECIFICATION

(11) **EP 3 646 933 B1**
(45) Date of publication and mention of the grant of the patent: **14.07.2021**
(21) Application number: 19205778.4
(22) Date of filing: 29.10.2019
(51) Int. Cl.: B01D 46/00, B01D 46/10, B01D 46/52

(54) **A COVER FOR FILTERING ELEMENT**
DECKELELEMENT FÜR EIN FILTERELEMENT
COUVERCLE DE FILTRE

(30) Priority: 30.10.2018 IT 201800009906
(43) Date of publication of application: 06.05.2020
(73) Proprietor: DENSO THERMAL SYSTEMS S.p.A., 10046 Poirino (Torino) (IT)
(72) Inventor: BALZO, Michele, I-10046 POIRINO (Torino) (IT); NICOLE', Fabrizio, I-10046 POIRINO (Torino) (IT)
(74) Representative: Vanzini, Christian

(56) References cited:
- EP-A1- 2 397 210
- WO-A1-94/11089
- DE-A1-102008 013 501
- DE-A1-102009 035 979
- DE-C1- 10 123 969

## Description

The present invention refers to an assembly including
a filtering element comprising a zigzag-folded filtering web ending frontally with an end panel having a free margin, and
a cover configured to be removably fixed to a filter housing adapted to receive the filtering element, said cover comprising a wall adapted to be placed in front of and in contact with the end panel of the filtering element,
wherein at least one holding formation is formed on said wall, said at least one holding formation being adapted to be coupled with the end panel of the filtering element to hold the filtering element against the wall of the cover,
wherein said at least one holding formation defines a slot positioned between the wall of the cover and the holding formation.

Filtering elements made from a zigzag-folded filtering web, and made in particular of non-woven fabric, are produced for a wide range of applications. For example, these filtering elements are used to filter fresh air into the passenger compartment of a motor vehicle or into air conditioning systems. In motor vehicles, filtering elements of this type are inserted into housings such as frames or boxes.

A known problem with filtering elements of the type indicated above concerns air leaks that may occur at the end panels of the filtering element. During operation, these leaks may create a deformation of the folds of the filtering web adjacent to the end panel, further intensifying the bypass effect and resulting in inefficient use of the filtering element. In such circumstances, there is therefore the risk that it will no longer be possible to meet the technical requirements in terms of permissible leaks.

Various solutions to this problem have been proposed, which involve the use of additional reinforcement or sealing elements, obtained on or applied to the end panel of the filter element. This has a disadvantage from the point of view of the production of the filtering element, since additional production steps are necessary for the production of the additional reinforcement or sealing elements.

DE 10 2009 035979 A1 and DE 101 23 969 C1 describe an assembly according to the preamble to claim 1. This known cover has a holding formation adapted to be coupled with the end panel of the filtering element to hold the filtering element against the wall of the cover. The aforesaid holding formation defines a slot positioned between the wall of the cover and the holding formation and adapted to receive the end panel of the filtering element.

To work effectively, the solutions known from DE 10 2009 035979 A1 and DE 101 23 969 C1 require the end panel to be inserted into the slot on the side wherein the panel forms a fold with the adjacent panel. If the end panel is inserted from its free side, which is generally less rigid, there is a risk that the holding action will not be carried out in an optimal manner.

One object of the present invention is therefore to make available a solution that allows the drawbacks mentioned above to be solved at least in part.

For this object, the subject of the invention is an assembly with the features defined in claim 1.

According to the invention, the slot is adapted to receive the free margin of the end panel of the filtering element, the slot having a minimum width less than the thickness of the end panel of the filtering element, wherein said at least one holding formation is made as an elastically deformable clip and configured to exert an elastic holding force on the end panel of the filtering element. This elastic holding force allows the end panel of the filter element to be effectively held even when this fold is inserted into the slot by its less rigid free side.

According to a particularly preferred embodiment, said at least one holding formation is made of plastic material in a single piece with the wall of the cover.

With the cover according to the invention it is possible to increase the filtration efficiency at the side of the filter element adjacent to the cover. Moreover, due to the fact that the filter element is attached to the cover, the vibrations between the filter element and the walls of the filter housing, or at least the vibrations between the filter element and the cover, are reduced. A further advantage consists in easier maintenance operations than in the known solutions, as the cover and filtering element may be removed from the filter housing in a single operation.

Further features and advantages of the cover according to the invention will become more apparent in the following detailed description of an embodiment of the invention, made with reference to the accompanying drawings, provided purely to be illustrative and non-limiting, wherein
Figure 1 is a perspective view of a cover according to the invention assembled with a filtering element;
Figure 2 is a cutaway view of the assembly of Figure 1, taken along the line II-II;
Figure 3 is an enlarged view of a detail of Figure 2, indicated by the arrow III;
Figure 4 is a plan view of the cover; and
Figure 5 is a view in cross-section of the cover of Figure 4, taken along the line V-V.

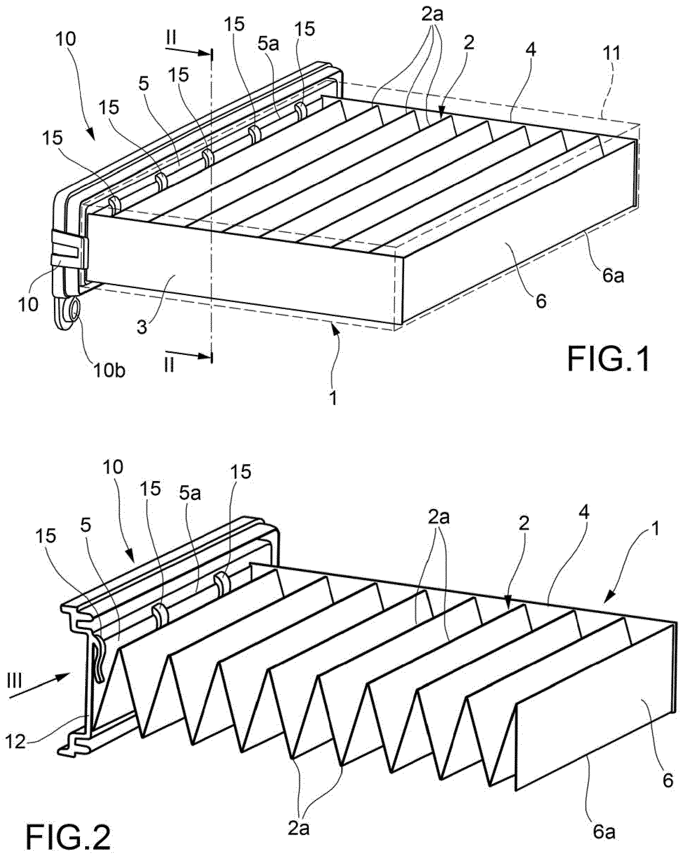

Figures 1 and 2 show a filtering element 1 comprising a zigzag-folded filtering web 2. The filtering element 1 is substantially plate-shaped and further comprises two opposing sides or side bands 3 and 4, made of the same material as the filtering web 2 and joined thereto. The material of the filtering element may comprise, for example, a non-woven fabric, and may comprise a single layer or several layers coupled together.

At its opposite ends, the filtering web 2 comprises two respective end panels 5 and 6, which delimit the filtering web 2 in the longitudinal direction. For the purpose of the present description, "longitudinal direction" means the direction orthogonal to the fold lines 2a of the filtering web 2. Each end panel 5, 6 ends with a respective free margin 5a, 6a, extending - according to a plan view - approximately parallel to the fold lines 2a.

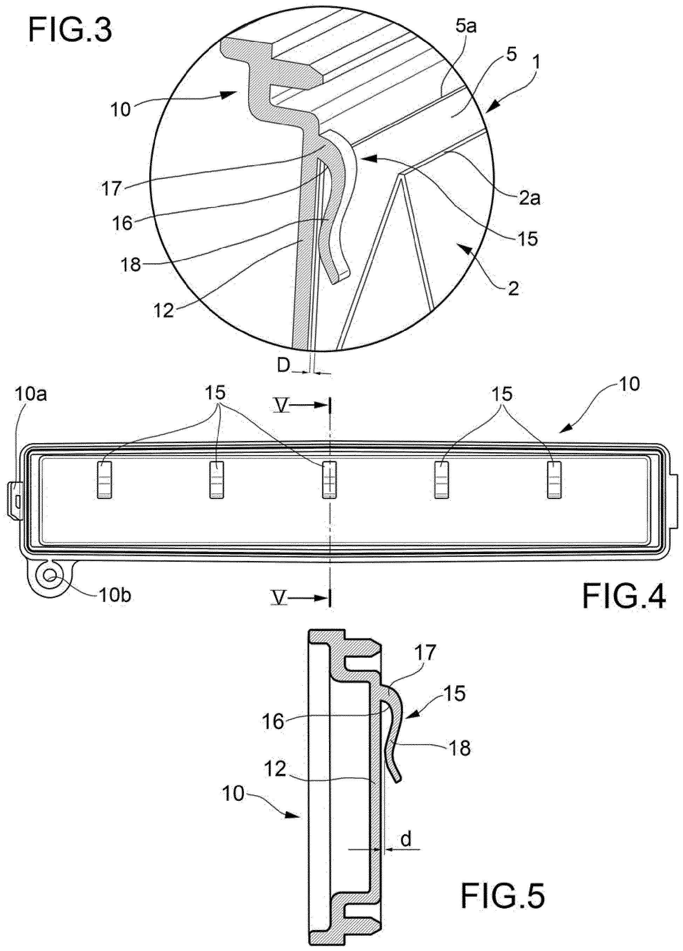

With reference also to Figures 3 to 5, a cover 10 is shown, configured to be fixed in a removable way to a filter housing 11 suitable to receive the filtering element 1, and represented schematically with a dashed line only in Figure 1.

The cover 10 may be an element made of plastic material in a single piece. On the cover 10, a gasket (not shown) may be conventionally provided to sealingly close the cover 10 on an inlet of the filter housing 11. In addition, the cover 10 may be conventionally equipped with fastening means, e.g. snap-on coupling members 10a or screw holes 10b, which are provided to secure the cover 10 at the inlet of the filter housing 11. The filter housing 11 may, for example, be a frame or a box, and is configured to allow a flow of fluid, e.g. air, to pass through the filter element 1 in a direction approximately orthogonal to the fold lines 2a.

The cover 10 comprises a wall 12 adapted to be placed in front of and in contact with one of the end panels 5 of the filtering element 1. On this wall 12 at least one holding formation 15 (in the example, a plurality of holding formations) is obtained, adapted to be coupled with the end panel 5 of the filtering element 1 to hold the filtering element 1 against the wall 12 of the cover 10.

The holding formations 15 are preferably made in one piece with the wall 12 of the cover 10. According to some less preferable embodiments, the holding formations could be pieces made separately from the cover 10, and then permanently fixed thereto, e.g. glued or welded.

With particular reference to Figures 3 and 5, each holding formation 15 defines a slot 16 between the wall 12 of the cover 10 and the holding formation 15, which is adapted to receive the end panel 5 of the filtering element 1. In the example shown, each holding formation 15 comprises a foot 17 protruding from the wall 12 and a holding arm 18 extending from the foot 17 in a main direction approximately parallel to the wall 12.

Preferably, each holding formation 15 is made as an elastically deformable clip and configured to exert an elastic holding force on the end panel 5 of the filtering element 1. For this purpose, the slot 16 must have a minimum width d less than the thickness D of the end web 5 of the filtering element 1.

It is understood that the invention is not limited to the embodiments described and illustrated herein, but rather may undergo modifications relating to the shape and arrangement of parts, construction and operating details according to the numerous possible variants which will appear suitable to persons skilled in the art and which are to be understood as comprised in the scope of the invention, as defined by the following claims.

## Claims

1. An assembly including
a filtering element (1) comprising a zigzag-folded filtering web (2) ending frontally with an end panel (5) having a free margin (5a), and
a cover (10) configured to be removably fixed to a filter housing (11) adapted to receive the filtering element (1), said cover comprising a wall (12) adapted to be placed in front of and in contact with the end panel (5) of the filtering element (1),
wherein at least one holding formation (15) is formed on said wall, said at least one holding formation being adapted to be coupled with the end panel (5) of the filtering element (1) to hold the filtering element (1) against the wall (12) of the cover (10),
wherein said at least one holding formation (15) defines a slot (16) positioned between the wall (12) of the cover (10) and the holding formation (15),
the assembly being **characterized in that** the slot (16) is adapted to receive the free margin (5a) of the end panel (5) of the filtering element (1), the slot (16) having a minimum width (d) less than the thickness (D) of the end panel (5) of the filtering element (1),
wherein said at least one holding formation (15) is made as an elastically deformable clip and configured to exert an elastic holding force on the end panel (5) of the filtering element (1).

2. An assembly according to claim 1, wherein said at least one holding formation (15) is made of plastic material in a single piece with the wall (12) of the cover (10).

## Patentansprüche

1. Anordnung mit
einem Filterelement (1), das eine zickzackförmig gefaltete Filterbahn (2) aufweist, die stirnseitig mit einer einen freien Rand (5a) aufweisenden Endplatte (5) endet, und
einer Abdeckung (10), die so ausgestaltet ist, dass sie abnehmbar an einem zur Aufnahme des Filterelements (1) geeigneten Filtergehäuse (11) befestigt ist, wobei die Abdeckung eine Wand (12) aufweist, die dazu ausgelegt ist, vor und in Kontakt mit der Endplatte (5) des Filterelements (1) angeordnet zu werden,
wobei mindestens eine Haltevorrichtung (15) an der Wand ausgebildet ist, wobei die mindestens eine Haltevorrichtung dazu ausgelegt ist, mit der Endplatte (5) des Filterelements (1) gekoppelt zu werden, um das Filterelement gegen die Wand des Deckels zu halten,
wobei die mindestens eine Haltevorrichtung (15) einen sich zwischen der Wand (12) der Abdeckung (10) und der Haltevorrichtung (15) befindenden Schlitz (16) begrenzt,
wobei die Anordnung **dadurch gekennzeichnet ist, dass** der Schlitz (16) dazu geeignet ist, den freien Rand (5a) der Endplatte (5) des Filterelements (1) aufzunehmen, wobei der Schlitz (16) eine Mindestbreite (d) aufweist, die geringer ist als die Dicke (D) der Endplatte (5) des Filterelements (1),
wobei die mindestens eine Haltevorrichtung (15) als elastisch verformbare Klemme ausgebildet und dazu ausgelegt ist, eine elastische Haltekraft auf die Endplatte (5) des Filterelements (1) auszuüben.

2. Anordnung nach Anspruch 1, wobei die mindestens eine Haltevorrichtung (15) aus Kunststoff und einstückig mit der Wand (12) der Abdeckung (10) gefertigt ist.

## Revendications

1. Ensemble comprenant
un élément filtrant (1) comprenant une bande filtrante pliée en zigzag (2) et se terminant frontalement par un panneau d'extrémité (5) ayant un bord libre (5a), et
un couvercle (10) conçu pour être fixé de manière amovible à un boîtier de filtre (11) adapté pour recevoir l'élément filtrant (1), ledit couvercle comprenant une paroi (12) adaptée pour être placée devant et en contact avec le panneau d'extrémité (5) de l'élément filtrant (1),
dans lequel au moins une formation de maintien (15) est formée sur ladite paroi, ladite formation de maintien, au moins au nombre de une, étant adaptée pour être couplée au panneau d'extrémité (5) de l'élément filtrant (1) afin de maintenir l'élément filtrant (1) contre la paroi (12) du couvercle (10),
dans lequel ladite formation de maintien (15), au moins au nombre de une, définit une fente (16) positionnée entre la paroi (12) du couvercle (10) et la formation de maintien (15),
l'ensemble étant **caractérisé en ce que** la fente (16) est adaptée pour recevoir le bord libre (5a) du panneau d'extrémité (5) de l'élément filtrant (1), la fente (16) ayant une largeur minimale (d) inférieure à l'épaisseur (D) du panneau d'extrémité (5) de l'élément filtrant (1),
dans lequel ladite formation de maintien (15), au moins au nombre de une, est réalisée sous la forme d'une attache déformable par élasticité et configurée pour exercer une force de maintien élastique sur le panneau d'extrémité (5) de l'élément filtrant (1).

2. Ensemble selon la revendication 1, dans lequel ladite formation de maintien (15), au moins au nombre de une, est faite d'un matériau plastique en une seule pièce avec la paroi (12) du couvercle (10).
